# EUROPEAN PATENT APPLICATION

(11) **EP 4 447 527 A1**
(43) Date of publication of application: **16.10.2024**
(21) Application number: 21966860.5
(22) Date of filing: 10.12.2021
(51) Int. Cl.: H04W 24/04

(54) **MEASUREMENT GAP INDICATION METHOD AND APPARATUS**

(71) Applicant: Beijing Xiaomi Mobile Software Co., Ltd., Beijing 100085 (CN)
(72) Inventor: LI, Xiaolong, Beijing 100085 (CN)
(74) Representative: Dehns Germany Partnerschaft mbB
(86) International application number: PCT/CN2021/137260
(87) International publication number: WO 2023/102942

(57) **Abstract**

Embodiments of the present application disclose a measurement gap indication method and apparatus. The method comprises: receiving a measurement gap use request; and sending first indication information to a terminal device according to the measurement gap use request, the first indication information being used for indicating a measurement gap of the terminal device. An access network device can determine a measurement gap of a terminal device according to a received measurement gap use request, and indicates the measurement gap to the terminal device. Thus, the problem that measurement gaps are repeatedly requested or requested measurement gaps are different is avoided, the accuracy of positioning measurement is improved, the positioning time delay is reduced, and the positioning efficiency is improved.

## Description

### FIELD

The present disclosure relates to the field of communication technology, and more particularly, to a method and apparatus for indicating a measurement gap.

### BACKGROUND

In a 5G new radio (NR) system, a variety of positioning techniques are introduced. Some positioning techniques require the terminal to measure a positioning reference signal (PRS), which requires the terminal to request a measurement gap (MG) for measuring the PRS from the network. In the related art, a terminal can request the network to activate the measurement gap via a radio resource control (RRC) message or a media access control (MAC) layer control element (CE), MAC CE, and a location management function (LMF) can also request the base station to activate the measurement gap.

### SUMMARY

According to embodiments of a first aspect of the present disclosure, there is provided a method for indicating a measurement gap, which is performed by an access network device, and includes: receiving a measurement gap usage request; and sending first indication information to a terminal device according to the measurement gap usage request. The first indication information is used to indicate a measurement gap of the terminal device.

Optionally, the method further includes: determining measurement gap configuration information. A measurement gap corresponding to the measurement gap usage request is one of at least one measurement gap included in the measurement gap configuration information.

Optionally, receiving the measurement gap usage request includes: receiving a measurement gap usage request sent by the terminal device; and/or receiving a measurement gap usage request sent by a core network device.

Optionally, in response to a measurement gap corresponding to the measurement gap usage request sent by the terminal device being different from a measurement gap corresponding to the measurement gap usage request sent by the core network device, the measurement gap of the terminal device indicated by the first indication information is the measurement gap corresponding to the measurement gap usage request sent by the terminal device.

Optionally, determining the measurement gap configuration information includes: acquiring the measurement gap configuration information from a core network device; or receiving first configuration information sent by the core network device, and determining the measurement gap configuration information according to the first configuration information.

Optionally, the first configuration information includes: at least one of positioning reference signal (PRS) configuration information or configuration information of a measurement gap.

According to embodiments of a second aspect of the present disclosure, there is provided a method for indicating a measurement gap, which is performed by a core network device, and includes: sending a measurement gap usage request to an access network device. The measurement gap usage request is used to determine first indication information, and the first indication information is used to indicate a measurement gap of a terminal device.

Optionally, the method further includes: sending indication information to the terminal device via the access network device. The indication information is used to indicate to the terminal device that the measurement gap has been requested.

Optionally, the method further includes: determining measurement gap configuration information. A measurement gap corresponding to the measurement gap usage request is one of at least one measurement gap included in the measurement gap configuration information.

Optionally, sending the indication information to the terminal device via the access network device includes: sending a long term evolution positioning protocol (LPP) message to the terminal device via the access network device. The LPP message includes the indication information.

Optionally, determining the measurement gap configuration information includes: determining the measurement gap configuration information according to at least one of positioning reference signal (PRS) configuration information, a positioning accuracy or a positioning delay requirement; or acquiring the measurement gap configuration information from the access network device.

According to embodiments of a third aspect of the present disclosure, there is provided a method for indicating a measurement gap, which is performed by a terminal device, and includes: receiving first indication information sent by an access network device. The first indication information is used to indicate a measurement gap of the terminal device.

Optionally, the method further includes: sending a measurement gap usage request to the access network device.

Optionally, the method further includes: receiving indication information sent by a core network device. The indication information is used to indicate to the terminal device that the measurement gap has been requested.

Optionally, sending the measurement gap usage request to the access network device includes: receiving measurement gap configuration information. A measurement gap corresponding to the measurement gap usage request is one of at least one measurement gap included in the measurement gap configuration information.

Optionally, receiving the indication information sent by the core network device includes: receiving a long term evolution positioning protocol (LPP) message sent by the core network device. The LPP message includes the indication information.

Optionally, receiving the measurement gap configuration information includes: receiving the measurement gap configuration information sent by the access network device via a radio resource control (RRC) message; or receiving the measurement gap configuration information sent by a core network device via a long term evolution positioning protocol (LPP) message.

According to embodiments of a fourth aspect of the present disclosure, there is provided a method for indicating a measurement gap, which is performed by a core network device, and includes: triggering a positioning reference signal (PRS) measurement by the core network device; and sending a measurement gap of a terminal device to the terminal device.

Optionally, sending the measurement gap of the terminal device to the terminal device includes: sending second indication information to the terminal device via an access network device. The second indication information carries the measurement gap of the terminal device.

Optionally, the method further includes: determining measurement gap configuration information. The measurement gap of the terminal device is one of at least one measurement gap included in the measurement gap configuration information.

Optionally, sending the second indication information to the terminal device includes: sending a long term evolution positioning protocol (LPP) message to the terminal device via the access network device. The LPP message includes the second indication information.

Optionally, determining the measurement gap configuration information includes: determining the measurement gap configuration information according to at least one of positioning reference signal (PRS) configuration information, a positioning accuracy or a positioning delay requirement; or acquiring the measurement gap configuration information from an access network device.

According to embodiments of a fifth aspect of the present disclosure, there is provided a method for indicating a measurement gap, which is performed by a terminal device, and includes: receiving a measurement gap of the terminal device sent by a core network device. The measurement gap is used for a positioning reference signal (PRS) measurement.

Optionally, receiving the measurement gap of the terminal device sent by the core network device includes: receiving a long term evolution positioning protocol (LPP) message sent by the core network device via an access network device. The LPP message includes the measurement gap

According to embodiments of a sixth aspect of the present disclosure, there is provided an apparatus for indicating a measurement gap, which includes: a transceiving unit, configured to receive a measurement gap usage request. The transceiving unit is further configured to send first indication information to a terminal device according to the measurement gap usage request, and the first indication information is used to indicate a measurement gap of the terminal device.

Optionally, the apparatus further includes: a processing unit, configured to determine measurement gap configuration information. A measurement gap corresponding to the measurement gap usage request is one of at least one measurement gap included in the measurement gap configuration information.

Optionally, the transceiving unit is configured to: receive a measurement gap usage request sent by the terminal device; and/or receive a measurement gap usage request sent by a core network device.

Optionally, in response to a measurement gap corresponding to the measurement gap usage request sent by the terminal device being different from a measurement gap corresponding to the measurement gap usage request sent by the core network device, the measurement gap of the terminal device indicated by the first indication information is the measurement gap corresponding to the measurement gap usage request sent by the terminal device.

Optionally, the processing unit is configured to: acquire the measurement gap configuration information from a core network device; or receive first configuration information sent by the core network device, and determine the measurement gap configuration information according to the first configuration information.

Optionally, the first configuration information includes: at least one of positioning reference signal (PRS) configuration information or configuration information of a measurement gap.

According to embodiments of a seventh aspect of the present disclosure, there is provided an apparatus for indicating a measurement gap, which includes: a transceiving unit, configured to send a measurement gap usage request to an access network device. The measurement gap usage request is used to determine first indication information, and the first indication information is used to indicate a measurement gap of a terminal device.

Optionally, the transceiving unit is further configured to: send indication information to the terminal device via the access network device. The indication information is used to indicate to the terminal device that the measurement gap has been requested.

Optionally, the apparatus further includes: a processing unit, configured to determine measurement gap configuration information. A measurement gap corresponding to the measurement gap usage request is one of at least one measurement gap included in the measurement gap configuration information.

Optionally, the transceiving unit is configured to: send a long term evolution positioning protocol (LPP) message to the terminal device via the access network device. The LPP message includes the indication information.

Optionally, the processing unit is configured to: determine the measurement gap configuration information according to at least one of positioning reference signal (PRS) configuration information, a positioning accuracy or a positioning delay requirement; or acquire the measurement gap configuration information from the access network device.

According to embodiments of an eighth aspect of the present disclosure, there is provided an apparatus for indicating a measurement gap, which includes: a transceiving unit, configured to receive first indication information sent by an access network device. The first indication information is used to indicate a measurement gap of the terminal device.

Optionally, the transceiving unit is further configured to: send a measurement gap usage request to the access network device.

Optionally, the transceiving unit is further configured to: receive indication information sent by a core network device. The indication information is used to indicate to the terminal device that the measurement gap has been requested.

Optionally, the transceiving unit is configured to: receive measurement gap configuration information. A measurement gap corresponding to the measurement gap usage request is one of at least one measurement gap included in the measurement gap configuration information.

Optionally, the transceiving unit is configured to: receive a long term evolution positioning protocol (LPP) message sent by the core network device. The LPP message includes the indication information.

Optionally, the transceiving unit is configured to: receive the measurement gap configuration information sent by the access network device via a radio resource control (RRC) message; or receive the measurement gap configuration information sent by a core network device via a long term evolution positioning protocol (LPP) message.

According to embodiments of a ninth aspect of the present disclosure, there is provided an apparatus for indicating a measurement gap, which includes: a transceiving unit configured to: trigger a positioning reference signal (PRS) measurement by a core network device; and send a measurement gap of a terminal device to the terminal device.

Optionally, the transceiving unit is configured to: send second indication information to the terminal device via an access network device. The second indication information carries the measurement gap of the terminal device.

Optionally, the apparatus further includes: a processing unit, configured to determine measurement gap configuration information. A measurement gap of the terminal device is one of at least one measurement gap included in the measurement gap configuration information.

Optionally, the transceiving unit is configured to: send a long term evolution positioning protocol (LPP) message to the terminal device via the access network device. The LPP message includes the second indication information.

Optionally, the processing unit is configured to: determine the measurement gap configuration information according to at least one of positioning reference signal (PRS) configuration information, a positioning accuracy or a positioning delay requirement; or acquire the measurement gap configuration information from an access network device.

According to embodiments of a tenth aspect of the present disclosure, there is provided an apparatus for indicating a measurement gap, which includes: a transceiving unit, configured to: receive a measurement gap of a terminal device sent by a core network device. The measurement gap is used for a positioning reference signal (PRS) measurement.

Optionally, the transceiving unit is configured to: receive a long term evolution positioning protocol (LPP) message sent by the core network device via an access network device. The LPP message includes the measurement gap.

According to embodiments of an eleventh aspect of the present disclosure, there is provided a communication device, which includes: a processor; and a memory having stored therein computer programs. The processor is configured to execute the computer programs stored in the memory to cause the communication device to perform the method for indicating a measurement gap as described in embodiments of the first aspect.

According to embodiments of a twelfth aspect of the present disclosure, there is provided a communication device, which includes: a processor; and a memory having stored therein computer programs. The processor is configured to execute the computer programs stored in the memory to cause the communication device to perform the method for indicating a measurement gap as described in embodiments of the second aspect or to perform the method for indicating a measurement gap as described in embodiments of the fourth aspect.

According to embodiments of a thirteenth aspect of the present disclosure, there is provided a communication device, which includes: a processor; and a memory having stored therein computer programs. The processor is configured to execute the computer programs stored in the memory to cause the communication device to perform the method for indicating a measurement gap as described in embodiments of the third aspect or to perform the method for indicating a measurement gap as described in embodiments of the fifth aspect.

According to embodiments of a fourteenth aspect of the present disclosure, there is provided a communication device, which includes: a processor and an interface circuit. The interface circuit is configured to receive code instructions and transmit the code instructions to the processor; and the processor is configured to run the code instructions to cause the communication device to perform the method for indicating a measurement gap as described in embodiments of the first aspect.

According to embodiments of a fifteenth aspect of the present disclosure, there is provided a communication device, which includes: a processor and an interface circuit. The interface circuit is configured to receive code instructions and transmit the code instructions to the processor; and the processor is configured to run the code instructions to cause the communication device to perform the method for indicating a measurement gap as described in embodiments of the second aspect or to perform the method for indicating a measurement gap as described in embodiments of the fourth aspect.

According to embodiments of a sixteenth aspect of the present disclosure, there is provided a communication device, which includes: a processor and an interface circuit. The interface circuit is configured to receive code instructions and transmit the code instructions to the processor; and the processor is configured to run the code instructions to cause the communication device to perform the method for indicating a measurement gap as described in embodiments of the third aspect or to perform the method for indicating a measurement gap as described in embodiments of the fifth aspect.

According to embodiments of a seventeenth aspect of the present disclosure, there is provided a computer-readable storage medium having stored therein instructions that, when executed, cause the method for indicating a measurement gap as described in embodiments of the first aspect to be implemented.

According to embodiments of an eighteenth aspect of the present disclosure, there is provided a computer-readable storage medium having stored therein instructions that, when executed, cause the method for indicating a measurement gap as described in embodiments of the second aspect or the method for indicating a measurement gap as described in embodiments of the fourth aspect to be implemented.

According to embodiments of a nineteenth aspect of the present disclosure, there is provided a computer-readable storage medium having stored therein instructions that, when executed, cause the method for indicating a measurement gap as described in embodiments of the third aspect or the method for indicating a measurement gap as described in embodiments of the fifth aspect to be implemented.

According to embodiments of a twentieth aspect of the present disclosure, there is provided a computer program that, when run on a computer, causes the computer to perform the method for indicating a measurement gap as described in embodiments of the first aspect.

According to embodiments of a twenty-first aspect of the present disclosure, there is provided a computer program that, when run on a computer, causes the computer to perform the method for indicating a measurement gap as described in embodiments of the second aspect or the method for indicating a measurement gap as described in embodiments of the fourth aspect.

According to embodiments of a twenty-second aspect of the present disclosure, there is provided a computer program that, when run on a computer, causes the computer to perform the method for indicating a measurement gap as described in embodiments of the third aspect or the method for indicating a measurement gap as described in embodiments of the fifth aspect.

With the method and apparatus for indicating a measurement gap according to embodiments of the present disclosure, the measurement gap usage request is received, the first indication information is sent to the terminal device according to the measurement gap usage request, and the first indication information is used to indicate the measurement gap of the terminal device, so that the access network device can determine the measurement gap of the terminal device according to the measurement gap usage request received, and indicate the measurement gap of the terminal device to the terminal device, thereby avoiding the problem that the measurement gap is repeatedly requested or measurement gaps requested are different, improving the accuracy of the location measurement, reducing the positioning delay, and improving the positioning efficiency.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

In order to clearly illustrate the technical solutions in embodiments of the present disclosure or in the related art, drawings that need to be used for describing embodiments of the present disclosure or the related art are described below.
FIG. 1 is a schematic architecture diagram of a communication system according to embodiments of the present disclosure;
FIG. 2 is a schematic flowchart of a method for indicating a measurement gap according to embodiments of the present disclosure;
FIG. 3 is a schematic flowchart of a method for indicating a measurement gap according to embodiments of the present disclosure;
FIG. 4 is a schematic flowchart of a method for indicating a measurement gap according to embodiments of the present disclosure;
FIG. 5 is a schematic flowchart of a method for indicating a measurement gap according to embodiments of the present disclosure;
FIG. 6 is a schematic flowchart of a method for indicating a measurement gap according to embodiments of the present disclosure;
FIG. 7 is a schematic flowchart of a method for indicating a measurement gap according to embodiments of the present disclosure;
FIG. 8 is a schematic flowchart of a method for indicating a measurement gap according to embodiments of the present disclosure;
FIG. 9 is a schematic flowchart of a method for indicating a measurement gap according to embodiments of the present disclosure;
FIG. 10 is a schematic flowchart of a method for indicating a measurement gap according to embodiments of the present disclosure;
FIG. 11 is a schematic flowchart of a method for indicating a measurement gap according to embodiments of the present disclosure;
FIG. 12 is a schematic flowchart of a method for indicating a measurement gap according to embodiments of the present disclosure;
FIG. 13 is a schematic block diagram of an apparatus for indicating a measurement gap according to embodiments of the present disclosure;
FIG. 14 is a schematic block diagram of an apparatus for indicating a measurement gap according to embodiments of the present disclosure;
FIG. 15 is a schematic block diagram of an apparatus for indicating a measurement gap according to embodiments of the present disclosure;
FIG. 16 is a schematic block diagram of an apparatus for indicating a measurement gap according to embodiments of the present disclosure;
FIG. 17 is a schematic block diagram of an apparatus for indicating a measurement gap according to embodiments of the present disclosure;
FIG. 18 is a schematic structure diagram of another apparatus for indicating a measurement gap according to embodiments of the present disclosure; and
FIG. 19 is a schematic structure diagram of a chip according to embodiments of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. Instead, they are merely examples of apparatuses and methods consistent with some aspects of the present disclosure as recited in the appended claims.

Terms used in embodiments of the present disclosure are only for the purpose of describing specific embodiments, but should not be construed to limit the present disclosure. As used in embodiments of the present disclosure and the appended claims, "a/an", "said" and "the" in singular forms are intended to include plural forms, unless clearly indicated in the context otherwise. It should also be understood that, the term "and/or" used herein represents and contains any or all possible combinations of one or more associated items listed.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" may be construed to mean "when" or "upon" or "in response to determining" depending on the context.

Embodiments of the present disclosure will be described in detail below, examples of which are illustrated in the accompanying drawings, in which the same or similar reference numerals designate the same or similar elements. Embodiments described below with reference to the accompanying drawings are illustrative, and intended to explain the present disclosure, and should not be construed to limit the present disclosure.

In order to better understand a method for indicating a measurement gap as described in embodiments of the present disclosure, a communication system to which embodiments of the present disclosure are applicable is firstly described below.

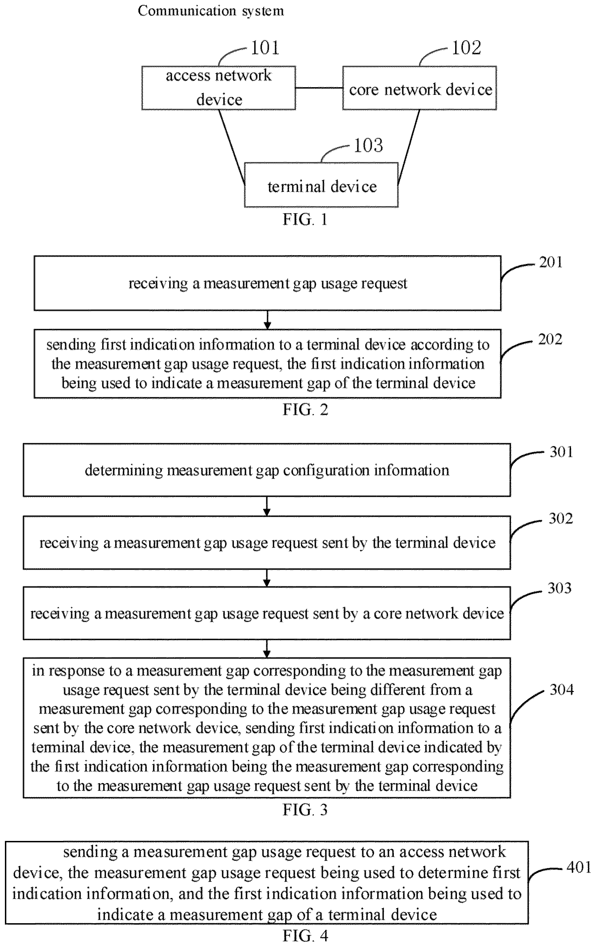

Referring to FIG. 1, which is a schematic architecture diagram of a communication system according to embodiments of the present disclosure, the communication system may include, but is not limited to, an access network device, core network device and a terminal device. The number and form of the devices shown in FIG. 1 are only as examples, and do not constitute a limitation to embodiments of the present disclosure. In practice, two or more access network devices, two or more core network devices, and two or more terminal devices may be included. As an example, the communication system shown in FIG. 1 includes one access network device 101, one core network device 102 and one terminal device 103.

It should be noted that the technical solutions of embodiments of the present disclosure may be applied to various communication systems, for example, a long term evolution (LTE) system, a 5th generation (5G) mobile communication system, a 5G new radio (NR) system, or other new mobile communication systems in the future.

The access network device 101 in embodiments of the present disclosure is an entity at a network side for transmitting or receiving signals. For example, the access network device 101 may be an evolved NodeB (eNB), a transmission reception point (TRP), a next generation NodeB (gNB) in an NR system, a base station in other future mobile communication systems, an access node in a wireless fidelity (WiFi) system, or the like. Embodiments of the present disclosure do not limit the specific technique and specific device form adopted by the network device. The network device described in embodiments of the present disclosure may be composed of a central unit (CU) and distributed units (DU). The CU may also be called a control unit. The CU-DU structure allows to split protocol layers of the network device, such as the base station, functions of some protocol layers are centrally controlled in the CU, functions of some or all the remaining protocol layers are distributed in the DUs, and the CU centrally controls the DUs.

The core network device 102 in embodiments of the present disclosure is an entity at the network side used for location estimation. For example, the core network device 102 may be a location management function (LMF) or the like.

The terminal device 103 in embodiments of the present disclosure is an entity at a terminal side for receiving or transmitting signals, such as a mobile phone. The terminal device may also be called a terminal, a user equipment (UE), a mobile station (MS), a mobile terminal (MT), and so on. The terminal device may be a device with a communication function, such as a car, a smart car, a mobile phone, a wearable device, a tablet Pad, a computer with a wireless transceiving function, a virtual reality (VR) terminal device, an augmented reality (AR) terminal device, a wireless terminal device in industrial control, a wireless terminal device in self-driving, a wireless terminal device in a remote medical surgery, a wireless terminal device in a smart grid, a wireless terminal device in a transportation safety, a wireless terminal device in a smart city, a wireless terminal device in a smart home, etc. Embodiments of the present disclosure do not limit the specific technique and the specific device form adopted by the terminal device.

In a 5G NR system, a variety of positioning techniques are introduced. Some positioning techniques require the terminal to measure a positioning reference signal (PRS), which requires the terminal to request a measurement gap (MG) for measuring the PRS from the network.

In related art, when the terminal device 103 needs to perform a location measurement requested by the core network device 102, if a measurement gap is not currently configured for the terminal device, or a measurement gap configured cannot meet the requirements of the terminal device 103, the terminal device 103 can request a measurement gap from the access network device 101 via a radio resource control (RRC) message or a medium access control layer control element (MAC CE). The core network device 102 may also request a measurement gap from the access network device in response to triggering the location measurement of the terminal device.

Therefore, there is a problem that both the terminal device 103 and the core network device 102 request a measurement gap, or the measurement gap requested by the terminal device 103 is different from that requested by the core network device 102.

In embodiments of the present disclosure, a measurement gap usage request is received, first indication information is sent to the terminal device according to the measurement gap usage request, and the first indication information is used to indicate the measurement gap of the terminal device, so that the access network device can determine the measurement gap of the terminal device according to the measurement gap usage request received, and indicate the measurement gap of the terminal device to the terminal device, thereby avoiding the problem that measurement gap is repeatedly requested, or measurement gaps requested are different, improving the accuracy of the location measurement, reducing the positioning delay, and improving the positioning efficiency.

It can be understood that the communication system described in embodiments of the present disclosure is aimed to illustrate the technical solutions according to embodiments of the present disclosure more clearly, and does not constitute a limitation to the technical solutions according to embodiments of the present disclosure. Those of ordinary skill in the art will understand that with the evolution of the system architecture and the emergence of new service scenarios, the technical solutions according to embodiments of the present disclosure are also applicable to similar technical problems.

In the following, the method and apparatus for indicating a measurement gap provided by the present disclosure will be described in detail with reference to the accompanying drawings.

Referring to FIG. 2, FIG. 2 is a schematic flowchart of a method for indicating a measurement gap according to embodiments of the present disclosure. It should be noted that the method for indicating a measurement gap in these embodiments of the present disclosure is performed by an access network device. The access network device is an entity at the network side for transmitting or receiving signals, such as gNB, TRP, or the like, which is not limited in embodiments of the present disclosure. As shown in FIG. 2, the method may include following steps.

In step 201, a measurement gap usage request is received.

The measurement gap usage request is a message for requesting a measurement gap of a terminal device, and the measurement gap usage request corresponds to a measurement gap.

The access network device receives the measurement gap usage request, and indicates the measurement gap of the terminal device according to the usage request.

In embodiments of the present disclosure, both the terminal device and a core network device may send a measurement gap usage request to the access network device. In other words, the access network device may receive the measurement gap usage request sent by the terminal device, and/or receive the measurement gap usage request sent by the core network device.

As a first possible implementation, the access network device receives the measurement gap usage request sent by the terminal device and the measurement gap usage request sent by the core network device.

As a second possible implementation, the access network device receives the measurement gap usage request sent by the terminal device.

As a third possible implementation, the access network device receives the measurement gap usage request sent by the core network device.

In step 202, first indication information is sent to the terminal device according to the measurement gap usage request. The first indication information is used to indicate a measurement gap of the terminal device.

The access network device determines the measurement gap of the terminal device according to the measurement gap usage request received, and indicates the measurement gap of the terminal device to the terminal device by sending the first indication information to the terminal device.

As described in step 201, both the terminal device and the core network device may send a measurement gap usage request to the access network device.

As a first possible implementation, the access network device receives the measurement gap usage request sent by the terminal device and the measurement gap usage request sent by the core network device.

In some embodiments, in response to both the terminal device and the core network device sending a measurement gap usage request to the access network device, and a measurement gap corresponding to the measurement gap usage request sent by the terminal device being different from a measurement gap corresponding to the measurement gap usage request sent by the core network device, the measurement gap of the terminal device indicated by the first indication information is the measurement gap corresponding to the measurement gap usage request sent by the terminal device.

That is, when the access network device receives both the measurement gap usage request sent by the terminal device and the measurement gap usage request sent by the core network device, and the measurement gap requested by the terminal device is different from that requested by the core network device, the access network device indicates the measurement gap requested by the terminal device to the terminal device. That is, the measurement gap indicated by the first indication information is the measurement gap corresponding to the measurement gap usage request sent by the terminal device.

It can be understood that when the measurement gap corresponding to the measurement gap usage request sent by the terminal device is the same as the measurement gap corresponding to the measurement gap usage request sent by the core network device, the measurement gap of the terminal device indicated by the first indication information is the measurement gap corresponding to the measurement gap usage request sent by the terminal device, and also is the measurement gap corresponding to the measurement gap usage request sent by the core network device.

As a second possible implementation, the access network device receives the measurement gap usage request sent by the terminal device. The measurement gap of the terminal device indicated by the first indication information is the measurement gap corresponding to the measurement gap usage request sent by the terminal device.

As a third possible implementation, the access network device receives the measurement gap usage request sent by the core network device. The measurement gap of the terminal device indicated by the first indication information is the measurement gap corresponding to the measurement gap usage request sent by the core network device.

In embodiments of the present disclosure, the access network device is also able to determine measurement gap configuration information of the terminal device.

The measurement gap configuration information is information for configuring the measurement gap of the terminal device, and includes configuration information of at least one measurement gap, such as a period, an offset parameter, or the like. The measurement gap corresponding to the measurement gap usage request is one of the at least one measurement gap. That is, the measurement gap usage request is used to request a target measurement gap used by the terminal device from the at least one measurement gap configured.

Optionally, the measurement gap configuration information includes configuration information of at least one measurement gap, and configuration information of each measurement gap corresponds to a measurement gap identifier for distinguishing measurement gaps differently configured.

As a possible implementation, the access network device acquires the measurement gap configuration information from the core network device.

As another possible implementation, the access network device receives first configuration information sent by the core network device, and determines the measurement gap configuration information according to the first configuration information.

It should be noted that the measurement gap configuration information determined by the access network device according to the first configuration information is first measurement gap configuration information. The measurement gap configuration information acquired by the access network device from the core network device is second measurement gap configuration information determined by the core network device. The first measurement gap configuration information may be the same as or different from the second measurement gap configuration information.

In some implementations, the first configuration information includes: at least one of positioning reference signal (PRS) configuration information or configuration information of a measurement gap.

As a first possible implementation, the access network device may determine the measurement gap configuration information according to the positioning reference signal (PRS) configuration information.

As a second possible implementation, the access network device may determine the measurement gap configuration information according to the configuration information of the measurement gap.

As a third possible implementation, the access network device may determine the measurement gap configuration information according to the positioning reference signal (PRS) configuration information and the configuration information of the measurement gap.

The positioning reference signal (PRS) configuration information includes PRS-related configurations, such as the type of the PRS, the period of the PRS, the resource location of the PRS, and the like. The access network device is able to determine configuration information of the measurement gap of the terminal device according to the received PRS configuration information, and further determine the measurement gap configuration information. The configuration information of the measurement gap is configuration information of at least one measurement gap. The configuration information of the measurement gap includes the period of the measurement gap, the offset parameter of the measurement gap, and the like.

In some implementations, the measurement gap usage request includes a measurement gap identifier of the measurement gap requested.

The access network device sends the first indication information to the terminal device according to the measurement gap identifier included in the measurement gap usage request to indicate the measurement gap corresponding to the terminal device.

In some implementations, the first indication information may indicate the measurement gap identifier of the measurement gap.

In summary, the measurement gap usage request is received, the first indication information is sent to the terminal device according to the measurement gap usage request, and the first indication information is used to indicate the measurement gap of the terminal device, so that the access network device can determine the measurement gap of the terminal device according to the measurement gap usage request received, and indicate the measurement gap of the terminal device to the terminal device, thereby avoiding the problem that the measurement gap is repeatedly requested, or measurement gaps requested are different, improving the accuracy of the location measurement, reducing the positioning delay, and improving the positioning efficiency.

Referring to FIG. 3, FIG. 3 is a schematic flowchart of a method for indicating a measurement gap according to embodiments of the present disclosure. It should be noted that the method for indicating a measurement gap according to embodiments of the present disclosure is performed by an access network device. The relevant description of the access network device has been provided above, which will not be elaborated here. As shown in FIG. 3, the method may include following steps.

In step 301, measurement gap configuration information is determined.

The measurement gap configuration information is information for preconfiguring a measurement gap of a terminal device, and includes configuration information of at least one measurement gap. The measurement gap corresponding to the measurement gap usage request is one of the at least one measurement gap.

Optionally, the measurement gap configuration information includes configuration information of at least one measurement gap, and configuration information of each measurement gap corresponds to a measurement gap identifier for distinguishing measurement gaps differently configured.

As a possible implementation, the access network device acquires the measurement gap configuration information from the core network device.

In some implementations, the access network device receives a new radio positioning protocol A (NRPPa) message carrying the measurement gap configuration information sent by the core network device to acquire the measurement gap configuration information.

Optionally, the NRPPa message may be an NRPPa positioning information request message, an NRPPa request user equipment (UE) sounding reference signal (SRS) activation message, or other self-defined NRPPa messages.

As another possible implementation, the access network device receives the first configuration information sent by the core network device, and determines the measurement gap configuration information according to the first configuration information.

In some implementations, the first configuration information includes: at least one of positioning reference signal (PRS) configuration information or configuration information of a measurement gap.

As a first possible implementation, the access network device may determine the measurement gap configuration information according to the positioning reference signal (PRS) configuration information.

As a second possible implementation, the access network device may determine the measurement gap configuration information according to the configuration information of the measurement gap.

As a third possible implementation, the access network device may determine the measurement gap configuration information according to the positioning reference signal (PRS) configuration information and the configuration information of the measurement gap.

The positioning reference signal (PRS) configuration information includes PRS-related configurations, such as the type of the PRS, the period of the PRS, the resource location of the PRS, and the like. The access network device is able to determine configuration information of the measurement gap of the terminal device according to the received PRS configuration information, and further determine the measurement gap configuration information. The configuration information of the measurement gap is configuration information of at least one measurement gap. The configuration information of the measurement gap includes the period of the measurement gap, the offset parameter of the measurement gap, and the like.

In some implementations, the core network device sends the first configuration information by sending a new radio positioning protocol (NRPPa) message to the access network device.

Optionally, the NRPPa message may be an NRPPa PRS configuration request message.

It should be noted that the measurement gap configuration information determined by the access network device according to the first configuration information is first measurement gap configuration information. The measurement gap configuration information acquired by the access network device from the core network device is second measurement gap configuration information determined by the core network device. The first measurement gap configuration information may be the same as or different from the second measurement gap configuration information.

In step 302, a measurement gap usage request sent by the terminal device is received.

In some implementations, the measurement gap usage request sent by the terminal device includes a measurement gap identifier of a measurement gap requested by the terminal device.

In step 303, a measurement gap usage request sent by the core network device is received.

In some implementations, the measurement gap usage request sent by the core network device includes a measurement gap identifier of a measurement gap requested by the core network device.

In step 304, in response to the measurement gap corresponding to the measurement gap usage request sent by the terminal device being different from the measurement gap corresponding to the measurement gap usage request sent by the core network device, first indication information is sent to the terminal device, the measurement gap of the terminal device indicated by the first indication information is the measurement gap corresponding to the measurement gap usage request sent by the terminal device.

That is, the access network device receives both the measurement gap usage request sent by the terminal device and the measurement gap usage request sent by the core network device, the measurement gap requested by the terminal device is different from that requested by the core network device, and the access network device indicates the measurement gap requested by the terminal device to the terminal device. That is, the measurement gap indicated by the first indication information is the measurement gap corresponding to the measurement gap usage request sent by the terminal device.

In some implementations, in response to the measurement gap identifier included in the measurement gap usage request sent by the terminal device being different from measurement gap identifier included in the measurement gap usage request sent by the core network device, the first indication information is sent to the terminal device, and the first indication information indicates the measurement gap identifier included in the measurement gap usage request sent by the terminal device.

For example, the terminal device sends a measurement gap usage request to the access network device to request a measurement gap with a measurement gap identifier of m, the core network device sends a measurement gap usage request to the access network device to request a measurement gap with a measurement gap identifier of n, and the first indication information sent by the access network device to the terminal device is used to indicate the measurement gap with the measurement gap identifier of m.

In summary, the measurement gap configuration information is determined, the measurement gap usage request sent by the terminal device is received, the measurement gap usage request sent by the core network device is received, and in response to the measurement gap corresponding to the measurement gap usage request sent by the terminal device being different from the measurement gap corresponding to the measurement gap usage request sent by the core network device, the first indication information is sent to the terminal device, and the measurement gap of the terminal device indicated by the first indication information is the measurement gap corresponding to the measurement gap usage request sent by the terminal device, so that the access network device can determine the measurement gap of the terminal device according to the measurement gap usage request received, and indicate the measurement gap of the terminal device to the terminal device, thereby avoiding the problem that the measurement gap is repeatedly requested, or measurement gaps requested are different, improving the accuracy of the location measurement, reducing the positioning delay, and improving the positioning efficiency.

Referring to FIG. 4, FIG. 4 is a schematic flowchart of a method for indicating a measurement gap according to embodiments of the present disclosure. It should be noted that the method for indicating a measurement gap in these embodiments of the present disclosure is performed by a core network device. The core network device is an entity at the network side for location estimation, such as a location management function (LMF) or the like. As shown in FIG. 4, the method may include the following steps.

In step 401, a measurement gap usage request sent to an access network device. The measurement gap usage request is used to determine first indication information, and the first indication information is used to indicate a measurement gap of a terminal device.

The measurement gap usage request is a message for requesting a measurement gap of a terminal device, and the measurement gap usage request corresponds to a measurement gap.

The access network device receives the measurement gap usage request sent by the core network device, and can indicate the measurement gap of the terminal device according to the usage request.

In some implementations, in response to triggering the terminal device to measure a PRS, the core network device sends the measurement gap usage request to the access network device.

In embodiments of the present disclosure, the core network device may also send indication information to the terminal device via the access network device, and the indication information is used to indicate to the terminal device that the measurement gap has been requested.

In some implementations, after receiving the indication information sent by the core network device, the terminal device determines that the measurement gap has been requested, and the terminal device stops sending a measurement gap usage request to the access network device.

Optionally, the core network device sends a long term evolution positioning protocol (LPP) message to the terminal device to send the indication information.

It can be understood that since the core network device cannot directly communicate and interact with the terminal device, the indication information needs to be sent to the terminal device via the access network device to indicate to the terminal device that the measurement gap has been requested.

In embodiments of the present disclosure, the core network device may also determine the measurement gap configuration information of the terminal device.

The measurement gap configuration information is information for preconfiguring a measurement gap of a terminal device, and includes configuration information of at least one measurement gap. The measurement gap corresponding to the measurement gap usage request is one of the at least one measurement gap.

Optionally, the measurement gap configuration information includes configuration information of at least one measurement gap, and configuration information of each measurement gap corresponds to a measurement gap identifier for distinguishing measurement gaps differently configured.

As a possible implementation, the core network device acquires the measurement gap configuration information from the access network device.

As another possible implementation, the core network device determines the measurement gap configuration information according to at least one of positioning reference signal (PRS) configuration information, a positioning accuracy, or a positioning delay requirement.

The positioning reference signal (PRS) configuration information includes PRS-related configurations, such as the type of the PRS, the period of the PRS, the resource location of the PRS, and the like.

It should be noted that the measurement gap configuration information acquired by the core network device from the access network device is first measurement gap configuration information determined by the access network device. The measurement gap configuration information determined by the core network device according to the above information is second measurement gap configuration information. The first measurement gap configuration information may be the same as or different from the second measurement gap configuration information.

As a first possible implementation, the core network device determines the measurement gap configuration information according to the positioning reference signal (PRS) configuration information.

The core network device is able to determine the configuration information of the measurement gap of the terminal device according to the PRS configuration information, and further determine the measurement gap configuration information.

As a second possible implementation, the core network device determines the measurement gap configuration information according to the positioning accuracy.

The core network device is able to determine the configuration information of the measurement gap of the terminal device according to the requirement of the positioning accuracy of the terminal device, and further determine the measurement gap configuration information.

As a third possible implementation, the core network device determines the measurement gap configuration information according to the positioning delay requirement.

The core network device is able to determine the configuration information of the measurement gap of the terminal device according to the positioning delay requirement of the terminal device, and further determine the measurement gap configuration information.

As a fourth possible implementation, the core network device determines the measurement gap configuration information according to the positioning reference signal (PRS) configuration information and the positioning accuracy.

As a fifth possible implementation, the core network device determines the measurement gap configuration information according to the positioning reference signal (PRS) configuration information and the positioning delay requirement.

As a sixth possible implementation, the core network device determines measurement gap configuration information according to the positioning accuracy and the positioning delay requirement.

As a seventh possible implementation, the core network device determines the measurement gap configuration information according to the positioning reference signal (PRS) configuration information, the positioning accuracy and the positioning delay requirement.

In summary, the measurement gap usage request is sent to the access network device, the measurement gap usage request is used to determine the first indication information, and the first indication information is used to indicate the measurement gap of the terminal device, so that the access network device can determine the measurement gap of the terminal device according to the measurement gap usage request received, and indicate the measurement gap of the terminal device to the terminal device, thereby avoiding the problem that the measurement gap is repeatedly requested, or measurement gaps requested are different, improving the accuracy of the location measurement, reducing the positioning delay, and improving the positioning efficiency.

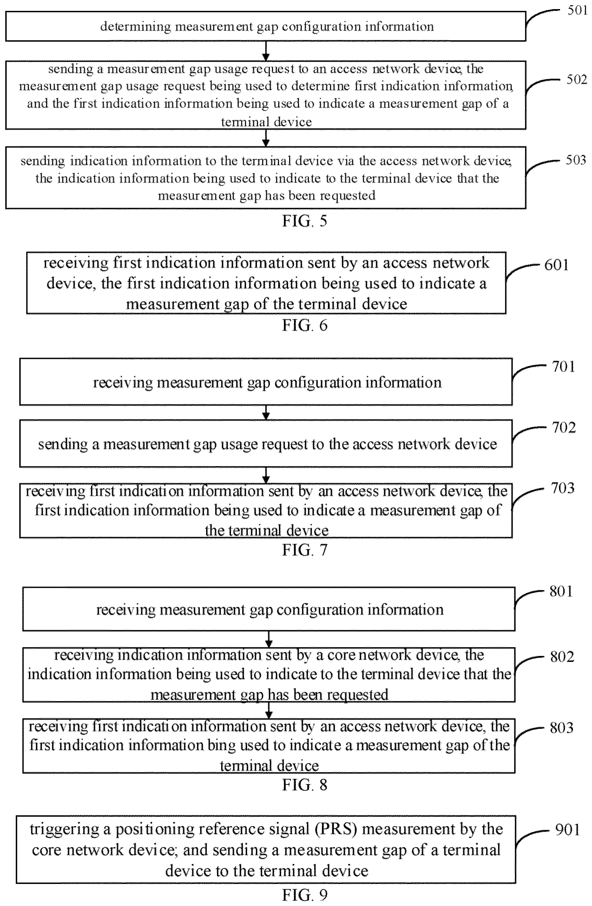

Referring to FIG. 5, FIG. 5 is a schematic flowchart of a method for indicating a measurement gap according to embodiments of the present disclosure. It should be noted that the method for indicating a measurement gap in these embodiments of the present disclosure is performed by a core network device. The relevant description of the core network device has been described, and will not be elaborated here. As shown in FIG. 5, the method may include the following steps.

In step 501, measurement gap configuration information is determined.

The measurement gap configuration information is information for preconfiguring a measurement gap of a terminal device, and includes configuration information of at least one measurement gap. The measurement gap corresponding to the measurement gap usage request is one of the at least one measurement gap.

Optionally, the measurement gap configuration information includes configuration information of at least one measurement gap, and configuration information of each measurement gap corresponds to a measurement gap identifier for distinguishing measurement gaps differently configured.

As a possible implementation, the core network device acquires the measurement gap configuration information from the access network device.

In some implementations, the core network device receives an NRPPa message carrying the measurement gap configuration information sent by the access network device to acquire the measurement gap configuration information.

Optionally, the NRPPa message may be an NRPPa request user equipment (UE) sounding reference signal (SRS) activation response message, or an NRPPa PRS configuration response message.

As another possible implementation, the core network device determines the measurement gap configuration information according to at least one of positioning reference signal (PRS) configuration information, a positioning accuracy, or a positioning delay requirement.

The positioning reference signal (PRS) configuration information includes PRS-related configurations, such as the type of the PRS, the period of the PRS, the resource location of the PRS, and the like.

The manner in which the core network device determines the measurement gap configuration information according to at least one of the positioning reference signal (PRS) configuration information, the positioning accuracy, or the positioning delay requirement may be any manner as described in various embodiments of the present disclosure, which is not limited in embodiments of the present disclosure and will not be elaborated here.

It should be noted that the measurement gap configuration information acquired by the core network device from the access network device is first measurement gap configuration information determined by the access network device. The measurement gap configuration information determined by the core network device according to the above information is second measurement gap configuration information. The first measurement gap configuration information may be the same as or different from the second measurement gap configuration information.

In step 502, a measurement gap usage request is sent to the access network device, the measurement gap usage request is used to determine first indication information, and the first indication information is used to indicate the measurement gap of the terminal device.

The measurement gap usage request is a message for requesting the measurement gap of the terminal device, the measurement gap usage request corresponds to a measurement gap, and the measurement gap corresponding to the measurement gap usage request is one of the at least one measurement gap.

The access network device receives the measurement gap usage request sent by the core network device, and can indicate the measurement gap of the terminal device according to the measurement gap usage request.

In some implementations, in response to triggering the terminal device to measure a PRS, the core network device sends the measurement gap usage request to the access network device.

In step 503, indication information is sent to the terminal device via the access network device, and the indication information is used to indicate to the terminal device that the measurement gap has been requested.

In some implementations, after receiving the indication information sent by the core network device, the terminal device determines that the measurement gap has been requested, and the terminal device stops sending the measurement gap usage request to the access network device.

It can be understood that since the core network device cannot directly communicate and interact with the terminal device, the indication information needs to be sent to the terminal device via the access network device to indicate to the terminal device that the measurement gap has been requested.

Optionally, the core network device sends a long term evolution positioning protocol (LPP) message to the terminal device to send the indication information.

In some implementations, the indication information may include the measurement gap identifier of the measurement gap.

In summary, the measurement gap configuration information is determined, the measurement gap usage request is sent to the access network device, the measurement gap usage request is used to determine the first indication information, the first indication information is used to indicate the measurement gap of the terminal device, the indication information is sent to the terminal device, and the indication information is used to indicate to the terminal device that the measurement gap has been requested, so that the access network device can determine the measurement gap of the terminal device according to the measurement gap usage request received, and indicate the measurement gap of the terminal device to the terminal device, thereby avoiding the problem that the measurement gap is repeatedly requested, or measurement gaps requested are different, improving the accuracy of the location measurement, reducing the positioning delay, and improving the positioning efficiency.

Referring to FIG. 6, FIG. 6 is a schematic flowchart of a method for indicating a measurement gap according to embodiments of the present disclosure. It should be noted that the method for indicating a measurement gap in these embodiments of the present disclosure is performed by a terminal device. As shown in FIG. 6, the method may include the following steps.

In step 601, first indication information sent by an access network device is received, and the first indication information is used to indicate a measurement gap of a terminal device.

The access network device determines the measurement gap of the terminal device according to the received measurement gap usage request, and sends the first indication information to the terminal device to indicate the measurement gap of the terminal device to the terminal device. The terminal device receives the first indication information.

In some implementations, the terminal device receives the first indication information, and determines to use the measurement gap indicated by the first indication information to measure the positioning reference signal PRS.

In embodiments of the present disclosure, the terminal device may send a measurement gap usage request to the access network device.

The measurement gap usage request is a message for requesting the measurement gap of the terminal device, and the measurement gap usage request corresponds to a measurement gap.

The access network device is able to indicate the measurement gap of the terminal device according to the measurement gap usage request.

In some implementations, the terminal device may send the measurement gap usage request to the access network device via a medium access control layer control element (MAC CE).

In embodiments of the present disclosure, the terminal device may also receive indication information sent by the core network device, and the indication information is used to indicate to the terminal device that the measurement gap has been requested.

In some implementations, after receiving the indication information sent by the core network device, the terminal device determines that the measurement gap has been requested, and stops sending the measurement gap usage request to the access network device.

It can be understood that since the core network device cannot directly communicate and interact with the terminal device, the indication information needs to be sent to the terminal device via the access network device.

Optionally, the terminal device receives a long term evolution positioning protocol (LPP) message sent by the core network device to receive the indication information.

In embodiments of the present disclosure, the terminal device may also receive measurement gap configuration information.

The measurement gap configuration information is determined by a network device and is used to preconfigure the measurement gap of the terminal device, and includes configuration information of at least one measurement gap. The measurement gap corresponding to the measurement gap usage request is one of the at least one measurement gap.

Optionally, the measurement gap configuration information includes configuration information of at least one measurement gap, and configuration information of each measurement gap corresponds to a measurement gap identifier for distinguishing measurement gaps differently configured.

In embodiments of the present disclosure, the network device may be an access network device, or may be a core network device. Measurement gap configuration information determined by the access network device is first measurement gap configuration information, and measurement gap configuration information determined by the core network is second measurement gap configuration information. That is, both the access network device and the core network device can preconfigure the measurement gap of the terminal device.

It can be understood that, since the core network device cannot directly communicate and interact with the terminal device, the second measurement gap configuration information determined by the core network device needs to be sent to the terminal device via the access network device.

It should be noted that the first measurement gap configuration information determined by the access network device may be the same as or different from the second measurement gap configuration information determined by the core network.

In summary, the first indication information sent by the access network device is received, the first indication information is used to indicate the measurement gap of the terminal device, so that the access network device can determine the measurement gap of the terminal device according to the measurement gap usage request received, and indicate the measurement gap of the terminal device to the terminal device, thereby avoiding the problem that the measurement gap is repeatedly requested, or measurement gaps requested are different, improving the accuracy of the location measurement, reducing the positioning delay, and improving the positioning efficiency.

Referring to FIG. 7, FIG. 7 is a schematic flowchart of a method for indicating a measurement gap according to embodiments of the present disclosure. It should be noted that the method for indicating a measurement gap in these embodiments of the present disclosure is performed by a terminal device. As shown in FIG. 7, the method may include the following steps.

In step 701, measurement gap configuration information is received.

The measurement gap configuration information is determined by a network device and used to preconfigure the measurement gap of the terminal device, and includes configuration information of at least one measurement gap. The measurement gap corresponding to the measurement gap usage request is one of the at least one measurement gap.

Optionally, the measurement gap configuration information includes configuration information of at least one measurement gap, and configuration information of each measurement gap corresponds to a measurement gap identifier for distinguishing measurement gaps differently configured.

In embodiments of the present disclosure, the network device may be an access network device, or may be a core network device. Measurement gap configuration information determined by the access network device is first measurement gap configuration information, and measurement gap configuration information determined by the core network is second measurement gap configuration information. That is, both the access network device and the core network device can preconfigure the measurement gap of the terminal device.

It should be noted that the first measurement gap configuration information determined by the access network device may be the same as or different from the second measurement gap configuration information determined by the core network.

In some embodiments, the terminal device receives an RRC message sent by the access network device to receive the measurement gap configuration information, and can request the measurement gap of the terminal device from the network device or request the network device to deactivate the measurement gap of the terminal device based on the measurement gap configuration information.

Optionally, the RRC message may be an RRC reconfiguration message.

In some embodiments, the terminal device receives an LPP message sent by the core network device to receive the measurement gap configuration information, and can request the measurement gap of the terminal device from the network device or request the network device to deactivate the measurement gap of the terminal device based on the measurement gap configuration information.

It can be understood that, since the core network device cannot directly communicate and interact with the terminal device, the second measurement gap configuration information determined by the core network device needs to be sent to the terminal device via the access network device.

Optionally, the LPP message may be at least one of LPP provide assistance data or LPP request location information.

In embodiments of the present disclosure, in response to the terminal device receiving the first measurement gap configuration information sent by the access network device and the second measurement gap configuration information sent by the core network device via the access network device, and the first measurement gap configuration information being different from the second measurement gap configuration information, the terminal device configures the measurement gap according to the first measurement gap configuration information sent by the access network device.

That is, if the access network device and the core network device each send a measurement gap configuration information to the terminal device, and the measurement gap configuration information sent by the access network device is different from the measurement gap configuration information sent by the core network device, the terminal device configures the measurement gap according to the measurement gap configuration information sent by the access network device.

In step 702, a measurement gap usage request is sent to the access network device.

The measurement gap usage request is used to request the measurement gap of the terminal device from the access network device.

The terminal device may send a measurement gap usage request to the access network device based on the measurement gap configuration information received, and the measurement gap corresponding to the measurement gap usage request is one of at least one measurement gap included in the measurement gap configuration information.

In some implementations, the terminal device may send the measurement gap usage request to the access network device via a medium access control layer control element (MAC CE).

In step 703, first indication information sent by the access network device is received, and the first indication information is used to indicate the measurement gap of the terminal device.

The access network device determines the measurement gap of the terminal device according to the measurement gap usage request received, and sends the first indication information to the terminal device to indicate the measurement gap of the terminal device to the terminal device. The terminal device receives the first indication information.

In some implementations, the terminal device receives the first indication information, and determines to use the measurement gap indicated by the first indication information to measure the positioning reference signal PRS.

In summary, the measurement gap configuration information is received, the measurement gap usage request is sent to the access network device, the first indication information sent by the access network device is received, and the first indication information is used to indicate the measurement gap of the terminal device, so that the access network device can determine the measurement gap of the terminal device according to the measurement gap usage request received, and indicate the measurement gap of the terminal device to the terminal device, thereby avoiding the problem that the measurement gap is repeatedly requested, or measurement gaps requested are different, improving the accuracy of the location measurement, reducing the positioning delay, and improving the positioning efficiency.

Referring to FIG. 8, FIG. 8 is a schematic flowchart of a method for indicating a measurement gap according to embodiments of the present disclosure. It should be noted that the method for indicating a measurement gap in these embodiments of the present disclosure is performed by a terminal device. As shown in FIG. 8, the method may include the following steps,

In step 801, measurement gap configuration information is received.

In embodiments of the present disclosure, the step 801 may be implemented in any manner as described in embodiments of the present disclosure, which is not limited in embodiments of the present disclosure, and will not be elaborated here.

In step 802, indication information sent by the core network device is received, and the indication information is used to indicate to the terminal device that the measurement gap has been requested.

In some implementations, after receiving the indication information sent by the core network device, the terminal device determines that the measurement gap has been requested, and stops sending the measurement gap usage request to the access network device.

It can be understood that since the core network device cannot directly communicate and interact with the terminal device, the indication information needs to be sent to the terminal device via the access network device.

Optionally, the terminal device receives a long term evolution positioning protocol (LPP) message sent by the core network device to receive the indication information.

In some implementations, the indication information may include a measurement gap identifier of the measurement gap.

In step 803, first indication information sent by the access network device is received, and the first indication information is used to indicate the measurement gap of the terminal device.

In some implementations, the access network device determines the measurement gap of the terminal device according to the received measurement gap usage request sent by the core network device, and indicates the measurement gap of the terminal device to the terminal device by sending the first indication information to the terminal device.

The terminal device receives the first indication information, and the measurement gap indicated by the first indication information is the measurement gap requested by the core network device.

In some implementations, the terminal device receives the first indication information, and determines to use the measurement gap indicated by the first indication information to measure the positioning reference signal PRS.

In summary, the measurement gap configuration information is received, the indication information sent by the core network device is received, the indication information is used to indicate to the terminal device that the measurement gap has been requested, the first indication information sent by the access network device is received, and the first indication information is used to indicate the measurement gap of the terminal device, so that the access network device can determine the measurement gap of the terminal device according to the measurement gap usage request received, and indicate the measurement gap of the terminal device to the terminal device, thereby avoiding the problem that the measurement gap is repeatedly requested, or measurement gaps requested are different, improving the accuracy of the location measurement, reducing the positioning delay, and improving the positioning efficiency.

Referring to FIG. 9, FIG. 9 is a schematic flowchart of a method for indicating a measurement gap according to embodiments of the present disclosure. It should be noted that the method for indicating a measurement gap in these embodiments of the present disclosure is performed by a core network device. The relevant description of the core network device has been described above, and will not be elaborated here. As shown in FIG. 9, the method may include the following steps.

In step 901, the core network device triggers a positioning reference signal (PRS) measurement, and sends a measurement gap of a terminal device to the terminal device.

The core network device is able to trigger the terminal device to measure the positioning reference signal (PRS), and directly indicate the measurement gap of the terminal device to the terminal device.

It can be understood that since the core network device cannot directly communicate and interact with the terminal device, the measurement gap needs to be sent to the terminal device via the access network device.

In some implementations, the core network device may indicate the measurement gap of the terminal device by sending second indication information to the terminal device.

In some implementations, the core network device sends a long term evolution positioning protocol (LPP) message to the terminal device, and the LPP message includes the second indication information.

In embodiments of the present disclosure, the core network device may also determine measurement gap configuration information.

The method for determining the measurement gap configuration information may be implemented in any manner as described in various embodiments of the present disclosure, which is not limited in embodiments of the present disclosure, and will not be elaborated here.

It can be understood that, in embodiments of the present disclosure, the core network device directly indicates the terminal device its measurement gap, without sending a usage request, which avoids that the measurement gap is repeatedly requested or the measurement gaps requested are different.

In summary, the core network device triggers the positioning reference signal (PRS) measurement, and sends the measurement gap of the terminal device to the terminal device, so that based on triggering the PRS measurement, the core network device can directly indicate the measurement gap of the terminal device, without sending request information, which avoids the problem that the measurement gap is repeatedly requested or the measurement gaps requested are different, thereby improving the accuracy of the location measurement, reducing the positioning delay, and improving the positioning efficiency.

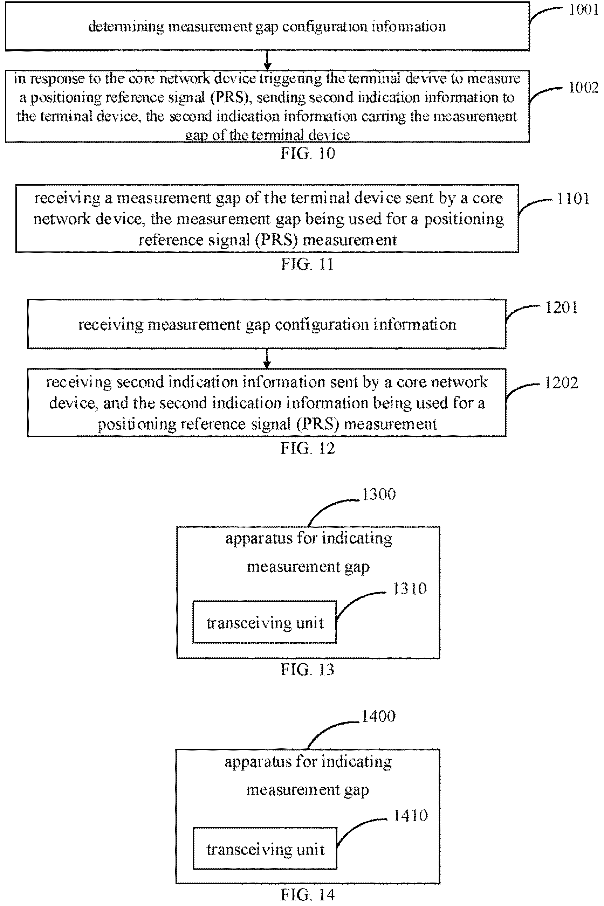

Referring to FIG. 10, FIG. 10 is a schematic flowchart of a method for indicating a measurement gap according to embodiments of the present disclosure. It should be noted that the method for indicating a measurement gap in these embodiments of the present disclosure is performed by a core network device. The relevant description of the core network device has been described above, and will not be elaborated here. As shown in FIG. 10, the method may include the following steps.

In step 1001, measurement gap configuration information is determined.

In embodiments of the present disclosure, the step 1001 may be implemented in any manner as described in various embodiments of the present disclosure, which is not limited in embodiments of the present disclosure, and will not be elaborated here.

In step 1002, in response to the core network device triggering the terminal device to measure a positioning reference signal (PRS), the core network device sends second indication information to the terminal device, the second indication information carries a measurement gap of a terminal device.

The core network device is able to trigger the terminal device to measure the positioning reference signal (PRS), and directly indicate the measurement gap of the terminal device to the terminal device. The measurement gap is one of at least one measurement gap included in the measurement gap configuration information.

The second indication information is used to indicate the measurement gap.

It can be understood that, since the core network device cannot directly communicate and interact with the terminal device, the second indication information needs to be sent to the terminal device via the access network device.

In some implementations, the second indication information is used to indicate a measurement gap identifier of the measurement gap.

In some implementations, the core network device sends a long term evolution positioning protocol (LPP) message to the terminal device via the access network device, and the LPP message includes the second indication information.

Optionally, the LPP message may be LPP request location information.

In summary, the measurement gap configuration information is determined, the core network device triggers the positioning reference signal (PRS) measurement, the core network device sends the second indication information to the terminal device, and the second indication information carries the measurement gap of the terminal device, so that based on triggering the PRS measurement, the core network device can directly indicate the measurement gap of the terminal device, without sending request information, which avoids the problem that the measurement gap is repeatedly requested or the measurement gaps requested are different, thereby improving the accuracy of the location measurement, reducing the positioning delay, and improving the positioning efficiency.

Referring to FIG. 11, FIG. 11 is a schematic flowchart of a method for indicating a measurement gap according to embodiments of the present disclosure. It should be noted that the method for indicating a measurement gap in these embodiments of the present disclosure is performed by a terminal device. As shown in FIG. 11, the method may include the following steps.

In step 1101, a measurement gap of the terminal device sent by the core network device is received, and the measurement gap is used for a positioning reference signal (PRS) measurement.

The core network device is able to trigger the terminal device to measure a positioning reference signal (PRS), and directly indicate the measurement gap of the terminal device to the terminal device.

It can be understood that since the core network device cannot directly communicate and interact with the terminal device, the measurement gap needs to be sent to the terminal device via the access network device.

In some implementations, the terminal device may receive second indication information sent by the core network device to determine the measurement gap of the terminal device.

In some implementations, the core network device sends a long term evolution positioning protocol (LPP) message to the terminal device, and the LPP message includes the second indication information.

In embodiments of the present disclosure, the terminal device may also receive measurement gap configuration information.

The method for receiving the measurement gap configuration information may be implemented in any manner as described in various embodiments of the present disclosure, which is not limited in embodiments of the present disclosure, and will not be elaborated here.

In summary, the measurement gap of the terminal device sent by the core network device is received, and the measurement gap is used for the positioning reference signal (PRS) measurement, so that based on triggering the PRS measurement, the core network device can directly indicate the measurement gap of the terminal device, without sending request information, which avoids the problem that the measurement gap is repeatedly requested or the measurement gaps requested are different, thereby improving the accuracy of the location measurement, reducing the positioning delay, and improving the positioning efficiency.

Referring to FIG. 12, FIG. 12 is a schematic flowchart of a method for indicating a measurement gap according to embodiments of the present disclosure. It should be noted that the method for indicating a measurement gap in these embodiments of the present disclosure is performed by a terminal device. As shown in FIG. 12, the method may include the following steps.

In step 1201, measurement gap configuration information is received.

In embodiments of the present disclosure, the step 1201 may be implemented in any manner as described in various embodiments of the present disclosure, which is not limited in embodiments of the present disclosure, and will not be elaborated here.

In step 1202, second indication information sent by a core network device is received, and the second indication information is used for a positioning reference signal (PRS) measurement.

The core network device, in response to the core network device itself triggering the terminal device to measure a positioning reference signal (PRS), is able to directly indicate the measurement gap of the terminal device to the terminal device, and the measurement gap is one of at least one measurement gap included in the measurement gap configuration information.

The terminal device determines the measurement gap according to the second indication information received.

It can be understood that, since the core network device cannot directly communicate and interact with the terminal device, the second indication information needs to be sent to the terminal device via the access network device.

In some implementations, the second indication information is used to indicate a measurement gap identifier of the measurement gap.

In some implementations, the terminal device receives a long term evolution positioning protocol (LPP) message sent by the core network device, and the LPP message includes the second indication information.

Optionally, the LPP message may be LPP request location information.

In some implementations, the terminal device receives the second indication information, and determines to use the measurement gap indicated by the second indication information to measure the positioning reference signal PRS.

In summary, the measurement gap configuration information is received, the second indication information sent by the core network device is received, and the second indication information is used for the positioning reference signal (PRS) measurement, so that based on triggering the PRS measurement, the core network device can directly indicate the measurement gap of the terminal device, without sending request information, which avoids the problem that the measurement gap is repeatedly requested or the measurement gaps requested are different, thereby improving the accuracy of the location measurement, reducing the positioning delay, and improving the positioning efficiency.

Corresponding to the methods for indicating a measurement gap provided in the above several embodiments, the present disclosure also provides apparatuses for indicating a measurement gap, since the apparatuses for indicating a measurement gap provided in embodiments of the present disclosure correspond to the methods provided in the above several embodiments, the implementations of the methods for indicating a measurement gap are also applicable to the apparatuses for indicating a measurement gap provided in the following embodiments, which will not be described in detail in the following embodiments.

Referring to FIG. 13, FIG. 13 is a schematic block diagram of an apparatus for indicating a measurement gap according to embodiments of the present disclosure.

As shown in FIG. 13, the apparatus 1300 for indicating a measurement gap includes: a transceiving unit 1310. The transceiving unit 1310 is configured to receive a measurement gap usage request. The transceiving unit 1310 is further configured to send first indication information to a terminal device according to the measurement gap usage request. The first indication information is used to indicate a measurement gap of the terminal device.

Optionally, the apparatus further includes: a processing unit, configured to determine measurement gap configuration information. A measurement gap corresponding to the measurement gap usage request is one of at least one measurement gap included in the measurement gap configuration information.

Optionally, the transceiving unit 1310 is configured to: receive a measurement gap usage request sent by the terminal device; and/or receive a measurement gap usage request sent by a core network device.

Optionally, in response to a measurement gap corresponding to the measurement gap usage request sent by the terminal device being different from a measurement gap corresponding to the measurement gap usage request sent by the core network device, the measurement gap of the terminal device indicated by the first indication information is the measurement gap corresponding to the measurement gap usage request sent by the terminal device.

Optionally, the processing unit is configured to: acquire the measurement gap configuration information from a core network device; or receive first configuration information sent by the core network device, and determine the measurement gap configuration information according to the first configuration information.

Optionally, the first configuration information includes: at least one of positioning reference signal (PRS) configuration information or configuration information of a measurement gap.

With the apparatus for indicating a measurement gap according to embodiments of the present disclosure, the measurement gap usage request is received, the first indication information is sent to the terminal device according to the measurement gap usage request, and the first indication information is used to indicate the measurement gap of the terminal device, so that the access network device can determine the measurement gap of the terminal device according to the measurement gap usage request received, and indicate the measurement gap of the terminal device to the terminal device, thereby avoiding the problem that the measurement gap is repeatedly requested, or measurement gaps requested are different, improving the accuracy of the location measurement, reducing the positioning delay, and improving the positioning efficiency.

Referring to FIG. 14, FIG. 14 is a schematic block diagram of an apparatus for indicating a measurement gap according to embodiments of the present disclosure.

As shown in FIG. 14, the apparatus 1400 for indicating a measurement gap includes: a transceiving unit 1410, configured to send a measurement gap usage request to an access network device. The measurement gap usage request is used to determine first indication information, and the first indication information is used to indicate a measurement gap of a terminal device.

Optionally, the transceiving unit 1410 is further configured to: send indication information to the terminal device via the access network device. The indication information is used to indicate to the terminal device that the measurement gap has been requested.

Optionally, the apparatus further includes: a processing unit, configured to determine measurement gap configuration information. A measurement gap corresponding to the measurement gap usage request is one of at least one measurement gap included in the measurement gap configuration information.

Optionally, the transceiving unit 1410 is configured to: send a long term evolution positioning protocol (LPP) message to the terminal device via the access network device. The LPP message includes the indication information.

Optionally, the processing unit is configured to: determine the measurement gap configuration information according to at least one of positioning reference signal (PRS) configuration information, a positioning accuracy or a positioning delay requirement; or acquire the measurement gap configuration information from the access network device.

With the apparatus for indicating a measurement gap according to embodiments of the present disclosure, the measurement gap usage request is sent to the access network device, the measurement gap usage request is used to determine the first indication information, and the first indication information is used to indicate the measurement gap of the terminal device, so that the access network device can determine the measurement gap of the terminal device according to the measurement gap usage request received, and indicate the measurement gap of the terminal device to the terminal device, thereby avoiding the problem that the measurement gap is repeatedly requested, or measurement gaps requested are different, improving the accuracy of the location measurement, reducing the positioning delay, and improving the positioning efficiency.

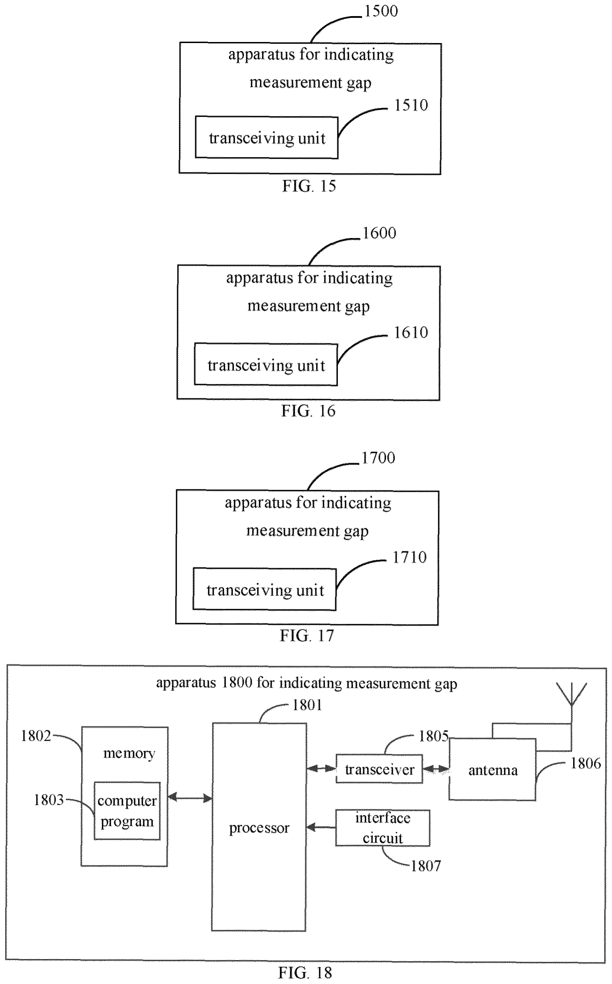

Referring to FIG. 15, FIG. 15 is a schematic block diagram of an apparatus for indicating a measurement gap according to embodiments of the present disclosure.

As shown in FIG. 15, the apparatus 1500 for indicating a measurement gap includes: a transceiving unit 1510, configured to receive first indication information sent by an access network device. The first indication information is used to indicate a measurement gap of the terminal device.

Optionally, the transceiving unit 1510 is further configured to: send a measurement gap usage request to the access network device.

Optionally, the transceiving unit 1510 is further configured to: receive indication information sent by a core network device. The indication information is used to indicate to the terminal device that the measurement gap has been requested.

Optionally, the transceiving unit 1510 is configured to: receive measurement gap configuration information. A measurement gap corresponding to the measurement gap usage request is one of at least one measurement gap included in the measurement gap configuration information.

Optionally, the transceiving unit 1510 is configured to: receive a long term evolution positioning protocol (LPP) message sent by the core network device. The LPP message includes the indication information.

Optionally, the transceiving unit 1510 is configured to: receive the measurement gap configuration information sent by the access network device via a radio resource control (RRC) message; or receive the measurement gap configuration information sent by a core network device via a long term evolution positioning protocol (LPP) message.

With the apparatus for indicating a measurement gap according to embodiments of the present disclosure, the first indication information sent by the access network device is received, the first indication information is used to indicate the measurement gap of the terminal device, so that the access network device can determine the measurement gap of the terminal device according to the measurement gap usage request received, and indicate the measurement gap of the terminal device to the terminal device, thereby avoiding the problem that the measurement gap is repeatedly requested, or measurement gaps requested are different, improving the accuracy of the location measurement, reducing the positioning delay, and improving the positioning efficiency.

Referring to FIG. 16, FIG. 16 is a schematic block diagram of an apparatus for indicating a measurement gap according to embodiments of the present disclosure.

As shown in FIG. 16, the apparatus 1600 for indicating a measurement gap includes: a transceiving unit 1610 configured to: trigger a positioning reference signal (PRS) measurement by a core network device; and send a measurement gap of a terminal device to the terminal device.

Optionally, the transceiving unit 1610 is configured to: send second indication information to the terminal device. The second indication information carries the measurement gap of the terminal device.

Optionally, the apparatus further includes: a processing unit, configured to determine measurement gap configuration information. A measurement gap of the terminal device is one of at least one measurement gap included in the measurement gap configuration information.

Optionally, the transceiving unit 1610 is configured to: send a long term evolution positioning protocol (LPP) message to the terminal device. The LPP message includes the second indication information.

Optionally, the processing unit is configured to: determine the measurement gap configuration information according to at least one of positioning reference signal (PRS) configuration information, a positioning accuracy or a positioning delay requirement; or acquire the measurement gap configuration information from an access network device.

With the apparatus for indicating a measurement gap according to embodiments of the present disclosure, the core network device triggers the positioning reference signal (PRS) measurement, and sends the measurement gap of the terminal device to the terminal device, so that based on triggering the PRS measurement, the core network device can directly indicate the measurement gap of the terminal device, without sending request information, which avoids the problem that the measurement gap is repeatedly requested or the measurement gaps requested are different, thereby improving the accuracy of the location measurement, reducing the positioning delay, and improving the positioning efficiency.

Referring to FIG. 17, FIG. 17 is a schematic block diagram of an apparatus for indicating a measurement gap according to embodiments of the present disclosure.

As shown in FIG. 17, the apparatus 1700 for indicating a measurement gap includes: a transceiving unit 1710, configured to: receive a measurement gap of a terminal device sent by a core network device. The measurement gap is used for a positioning reference signal (PRS) measurement.

Optionally, the transceiving unit 1710 is configured to: receive a long term evolution positioning protocol (LPP) message sent by the core network device. The LPP message includes the measurement gap.

With the apparatus for indicating a measurement gap according to embodiments of the present disclosure, the measurement gap of the terminal device sent by the core network device is received, and the measurement gap is used for the positioning reference signal (PRS) measurement, so that based on triggering the PRS measurement, the core network device can directly indicate the measurement gap of the terminal device, without sending request information, which avoids the problem that the measurement gap is repeatedly requested or the measurement gaps requested are different, thereby improving the accuracy of the location measurement, reducing the positioning delay, and improving the positioning efficiency.

In order to realize the above-mentioned embodiments, embodiments of the present disclosure also provide a communication device, which includes: a processor, and a memory having stored therein computer programs. The processor is configured to execute the computer programs stored in the memory to cause the communication device to perform the method as described in embodiments as shown in FIG. 2 to FIG. 3.

In order to realize the above-mentioned embodiments, embodiments of the present disclosure also provide a communication device, which includes: a processor, and a memory having stored therein computer programs. The processor is configured to execute the computer programs stored in the memory to cause the communication device to perform the method as described in embodiments as shown in FIG. 4 to FIG. 5 or the method as described in embodiments as shown in FIG. 9 to FIG. 10.

In order to realize the above-mentioned embodiments, embodiments of the present disclosure also provide a communication device, which includes: a processor, and a memory having stored therein computer programs. The processor is configured to execute the computer programs stored in the memory to cause the communication device to perform the method as described in embodiments as shown in FIG. 6 to FIG. 8 or the method as described in embodiments as shown in FIG. 11 to FIG. 12.

In order to realize the above-mentioned embodiments, embodiments of the present disclosure also provide a communication device, which includes: a processor and an interface circuit. The interface circuit is configured to receive code instructions and transmit the code instructions to the processor; and the processor is configured to run the code instructions to perform the method as described in embodiments as shown in FIG. 2 to FIG. 3.

In order to realize the above-mentioned embodiments, embodiments of the present disclosure also provide a communication device, which includes: a processor and an interface circuit. The interface circuit is configured to receive code instructions and transmit the code instructions to the processor; and the processor is configured to run the code instructions to perform the method as described in embodiments as shown in FIG. 4 to FIG. 5 or the method as described in embodiments as shown in FIG. 9 to FIG. 10.

In order to realize the above-mentioned embodiments, embodiments of the present disclosure also provide a communication device, which includes: a processor and an interface circuit. The interface circuit is configured to receive code instructions and transmit the code instructions to the processor; and the processor is configured to run the code instructions to perform the method as described in embodiments as shown in FIG. 6 to FIG. 8 or the method as described in embodiments as shown in FIG. 11 to FIG. 12.

Referring to FIG. 18, FIG. 18 is a schematic structure diagram of another apparatus for indicating a measurement gap according to embodiments of the present disclosure. The apparatus 1800 for indicating a measurement gap may be a network device, may also be a terminal device, may also be a chip, a chip system, or a processor that supports the network device to implement the above method, or may also be a chip, a chip system, or a processor that supports the terminal device to implement the above method. The apparatus may be used to implement the methods as described in the above method embodiments, and for details, reference may be made to the descriptions on the above method embodiments.

The apparatus 1800 for indicating a measurement gap may include one or more processors 1801. The processor 1801 may be a general-purpose processor or a special-purpose processor. For example, it may be a baseband processor or a central processing unit. The baseband processor may be configured to process a communication protocol and communication data, and the central processing unit may be configured to control the apparatus for indicating a measurement gap (such as a base station, a baseband chip, a terminal device, a terminal device chip, a DU or a CU, etc.), execute computer programs, and process data of computer programs.

Optionally, the apparatus 1800 for indicating a measurement gap may further include one or more memories 1802 that may have stored therein computer programs 1803. The processor 1801 is configured to execute the computer programs 1803 to cause the apparatus 1800 for indicating a measurement gap to perform the methods as described in the above method embodiments. The computer programs 1803 may be solidified in the processor 1801, and in this case, the processor 1801 may be implemented by hardware.

Optionally, the memory 1802 may have stored therein data. The apparatus 1800 for indicating a measurement gap and the memory 1802 may be set separately or integrated together.

Optionally, the apparatus 1800 for indicating a measurement gap may further include a transceiver 1805 and an antenna 1806. The transceiver 1805 may be called a transceiving unit, a transceiving machine, a transceiving circuit or the like, for implementing a transceiving function. The transceiver 1805 may include a receiver and a transmitter. The receiver may be called a receiving machine, a receiving circuit or the like, for implementing a receiving function. The transmitter may be called a sending machine, a sending circuit or the like for implementing a sending function.

Optionally, the apparatus 1800 for indicating a measurement gap may further include one or more interface circuits 1807. The interface circuit 1807 is configured to receive code instructions and transmit the code instructions to the processor 1801. The processor 1801 runs the code instructions to enable the apparatus 1800 for indicating a measurement gap to perform the methods as described in the foregoing method embodiments.

In an implementation, the processor 1801 may include a transceiver configured to implement receiving and sending functions. For example, the transceiver may be a transceiving circuit, an interface, or an interface circuit. The transceiving circuit, the interface, or the interface circuit for implementing receiving and sending functions may be separated or may be integrated together. The above transceiving circuit, the interface or the interface circuit may be configured to read and write codes/data, or the above transceiving circuit, the interface or the interface circuit may be configured to transmit or transfer signals.

In an implementation, the apparatus 1800 for indicating a measurement gap may include a circuit, and the circuit may implement the sending, receiving or communicating function as describe in the foregoing method embodiments. The processor and the transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process techniques, such as a complementary metal oxide semiconductor (CMOS), an nMetal-oxide-semiconductor (NMOS), a P-type metal oxide semiconductor (PMOS), a bipolar junction transistor (BJT), a bipolar CMOS (BiCMOS), silicon germanium (SiGe), gallium arsenide (GaAs), etc.

The apparatus for indicating a measurement gap described in the above embodiments may be the network device or the terminal device, but the scope of the apparatus for indicating a measurement gap described in the present disclosure is not limited thereto, and a structure of the apparatus for indicating a measurement gap is not limited by FIG. 13 to FIG. 17. The apparatus for indicating a measurement gap may be a stand-alone device or may be a part of a larger device. For example, the apparatus for indicating a measurement gap may be:
(1) a stand-alone integrated circuit (IC), or a chip, or a chip system or a subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal device, an intelligent terminal device, a cellular phone, a wireless device, a handheld machine, a mobile unit, a vehicle-mounted device, a network device, a cloud device, an artificial intelligence device, etc.;
(6) others.

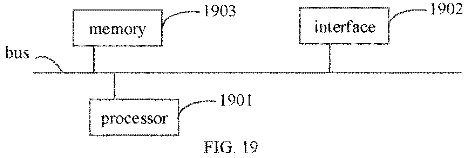

For the case where the apparatus for indicating a measurement gap may be a chip or a chip system, reference may be made to a schematic structural diagram of a chip shown in FIG. 19. The chip shown in FIG. 19 includes a processor 1901 and an interface 1902. In the chip, one or more processors 1901 may be provided, and more than one interface 1902 may be provided.

For the case where the chip is used to implement functions of the network device in embodiments of the present disclosure, the interface 1902 is configured to receive code instructions and transmit the code instructions to the processor; and the processor 1901 is configured to run the code instructions to perform the method as described in embodiments as shown in FIG. 2 to FIG. 3, or the method as described in embodiments as shown in FIG. 4 to FIG. 5, or the method as described in embodiments as shown in FIG. 9 to FIG. 10.

For the case where the chip is used to implement functions of the terminal device in embodiments of the present disclosure, the interface 1902 is configured to receive code instructions and transmit the code instructions to the processor; and the processor 1901 is configured to run the code instructions to perform the method as described in embodiments as shown in FIG. 6 to FIG. 8 or the method as described in embodiments as shown in FIG. 11 to FIG. 12.

Optionally, the chip further includes a memory 1903 for storing necessary computer programs and data.

Those skilled in the art may also understand that various illustrative logical blocks and steps listed in embodiments of the present disclosure may be implemented by electronic hardware, computer software, or a combination thereof. Whether such functions are implemented by hardware or software depends on specific applications and design requirements of an overall system. For each specific application, those skilled in the art may use various methods to implement the described functions, but such implementation should not be understood as beyond the protection scope of embodiments of the present disclosure.

Embodiments of the present disclosure also provide a communication system. The system includes the apparatus for indicating a measurement gap as the terminal device and the apparatus for indicating a measurement gap as the network device as described in the aforementioned embodiments as shown in FIG. 12 to FIG. 17, or the system includes the apparatus for indicating a measurement gap as the terminal device and the apparatus for indicating a measurement gap as the network device as described in the aforementioned embodiments as shown in FIG. 18.

The present disclosure also provides a readable storage medium having stored therein instructions that, when executed by a computer, cause functions of any of the above method embodiments to be implemented.

The present disclosure also provides a computer program product that, when executed by a computer, causes functions of any of the above method embodiments to be implemented.

The above embodiments may be implemented in whole or in part by a software, a hardware, a firmware or any combination thereof. When implemented using the software, the above embodiments may be implemented in whole or in part in a form of the computer program product. The computer program product includes one or more computer programs. When the computer program is loaded and executed on the computer, all or part of the processes or functions according to embodiments of the present disclosure will be generated. The computer may be a general-purpose computer, a special-purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)) etc.

Those of ordinary skill in the art can understand that the first, second, and other numeral numbers involved in the present disclosure are only for convenience of description, and are not intended to limit the scope of embodiments of the present disclosure, nor are they intended to represent a sequential order.

The term "at least one" used in the present disclosure may also be described as one or more, and the term "a plurality of' may cover two, three, four or more, which is not limited in the present disclosure. In embodiments of the present disclosure, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

The correspondence shown in each table in the present disclosure may be configured or predefined. The values of various information in each table are just examples, and may be configured as other values, which are not limited in the present disclosure. When configuring a correspondence between the information and various parameters, it is not necessary to configure all the correspondences shown in the tables. For example, the correspondences shown in some rows of a table in the present disclosure may not be configured. For another example, appropriate deformations or adjustments (such as splitting, merging, and so on) can be made based on the above table. The names of parameters shown in the titles of the above tables may also adopt other names understandable by the communication device, and the values or representations of the parameters may also be other values or representations understandable by the communication device. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present disclosure may be understood as definition, definition in advance, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such implementation should not be considered beyond the scope of the present disclosure.

Those skilled in the art can clearly understand that for the convenience and brevity of the description, the specific working process of the above-described system, apparatus and unit may refer to the corresponding process in the foregoing method embodiments, which will not be repeated here.

It can be understood that various forms of flowcharts shown above can be used to reorder, add, or remove steps. For example, the steps described in embodiments of the present disclosure may be performed in parallel, sequentially, or in a different order, which will not be limited herein, as long as the desired result of the technical solution disclosed in the present disclosure can be achieved.

The above-mentioned specific embodiments do not constitute a limitation on the protection scope of the present disclosure. It can be understood by those skilled in the art that various modifications, combinations, sub-combinations and substitutions can be made depending on design requirements and other factors. Any modifications, equivalent replacements, and improvements made within the spirit and principle of the present disclosure shall be included within the protection scope of the present disclosure.

## Claims

1. A method for indicating a measurement gap, performed by an access network device, comprising:
receiving a measurement gap usage request; and
sending first indication information to a terminal device according to the measurement gap usage request, wherein the first indication information is used to indicate a measurement gap of the terminal device.

2. The method according to claim 1, further comprising:
determining measurement gap configuration information; wherein a measurement gap corresponding to the measurement gap usage request is one of at least one measurement gap comprised in the measurement gap configuration information.

3. The method according to claim 1 or 2, wherein receiving the measurement gap usage request comprises:
receiving a measurement gap usage request sent by the terminal device; and/or
receiving a measurement gap usage request sent by a core network device.

4. The method according to claim 3, wherein in response to a measurement gap corresponding to the measurement gap usage request sent by the terminal device being different from a measurement gap corresponding to the measurement gap usage request sent by the core network device, the measurement gap of the terminal device indicated by the first indication information is the measurement gap corresponding to the measurement gap usage request sent by the terminal device.

5. The method according to claim 2, wherein determining the measurement gap configuration information comprises:
acquiring the measurement gap configuration information from a core network device; or
receiving first configuration information sent by the core network device, and determining the measurement gap configuration information according to the first configuration information.

6. The method according to claim 5, wherein the first configuration information comprises: at least one of positioning reference signal (PRS) configuration information or configuration information of a measurement gap.

7. A method for indicating a measurement gap, performed by a core network device, comprising:
sending a measurement gap usage request to an access network device;
wherein the measurement gap usage request is used to determine first indication information, and the first indication information is used to indicate a measurement gap of a terminal device.

8. The method according to claim 7, further comprising:
sending indication information to the terminal device via the access network device, wherein the indication information is used to indicate to the terminal device that the measurement gap has been requested.

9. The method according to claim 7 or 8, further comprising:
determining measurement gap configuration information; wherein a measurement gap corresponding to the measurement gap usage request is one of at least one measurement gap comprised in the measurement gap configuration information.

10. The method according to claim 8, wherein sending the indication information to the terminal device via the access network device comprises:
sending a long term evolution positioning protocol (LPP) message to the terminal device via the access network device, wherein the LPP message comprises the indication information.

11. The method according to claim 9, wherein determining the measurement gap configuration information comprises:
determining the measurement gap configuration information according to at least one of positioning reference signal (PRS) configuration information, a positioning accuracy or a positioning delay requirement; or
acquiring the measurement gap configuration information from the access network device.

12. A method for indicating a measurement gap, performed by a terminal device, comprising:
receiving first indication information sent by an access network device, wherein the first indication information is used to indicate a measurement gap of the terminal device.

13. The method according to claim 12, further comprising:
sending a measurement gap usage request to the access network device.

14. The method according to claim 12, further comprising:
receiving indication information sent by a core network device, wherein the indication information is used to indicate to the terminal device that the measurement gap has been requested.

15. The method according to claim 12, wherein sending the measurement gap usage request to the access network device comprises:
receiving measurement gap configuration information; wherein a measurement gap corresponding to the measurement gap usage request is one of at least one measurement gap comprised in the measurement gap configuration information.

16. The method according to claim 14, wherein receiving the indication information sent by the core network device comprises:
receiving a long term evolution positioning protocol (LPP) message sent by the core network device, wherein the LPP message comprises the indication information.

17. The method according to claim 15, wherein receiving the measurement gap configuration information comprises:
receiving the measurement gap configuration information sent by the access network device via a radio resource control (RRC) message; or
receiving the measurement gap configuration information sent by a core network device via a long term evolution positioning protocol (LPP) message.

18. A method for indicating a measurement gap, performed by a core network device, comprising:
triggering a positioning reference signal (PRS) measurement by the core network device; and
sending a measurement gap of a terminal device to the terminal device.

19. The method according to claim 18, wherein sending the measurement gap of the terminal device to the terminal device comprises:
sending second indication information to the terminal device via an access network device, wherein the second indication information carries the measurement gap of the terminal device.

20. The method according to claim 18, further comprising:
determining measurement gap configuration information; wherein the measurement gap of the terminal device is one of at least one measurement gap comprised in the measurement gap configuration information.

21. The method according to claim 19, wherein sending the second indication information to the terminal device comprises:
sending a long term evolution positioning protocol (LPP) message to the terminal device via the access network device, wherein the LPP message comprises the second indication information.

22. The method according to claim 20, wherein determining the measurement gap configuration information comprises:
determining the measurement gap configuration information according to at least one of positioning reference signal (PRS) configuration information, a positioning accuracy or a positioning delay requirement; or
acquiring the measurement gap configuration information from an access network device.

23. A method for indicating a measurement gap, performed by a terminal device, comprising:
receiving a measurement gap of the terminal device sent by a core network device, wherein the measurement gap is used for a positioning reference signal (PRS) measurement.

24. The method according to claim 23, wherein receiving the measurement gap of the terminal device sent by the core network device comprises:
receiving a long term evolution positioning protocol (LPP) message sent by the core network device via an access network device, wherein the LPP message comprises the measurement gap.

25. An apparatus for indicating a measurement gap, comprising:
a transceiving unit, configured to receive a measurement gap usage request;
wherein transceiving unit is further configured to send first indication information to a terminal device according to the measurement gap usage request, and the first indication information is used to indicate a measurement gap of the terminal device.

26. The apparatus according to claim 25, further comprising:
a processing unit, configured to determine measurement gap configuration information; wherein a measurement gap corresponding to the measurement gap usage request is one of at least one measurement gap comprised in the measurement gap configuration information.

27. The apparatus according to claim 25 or 26, wherein the transceiving unit is configured to:
receive a measurement gap usage request sent by the terminal device; and/or
receive a measurement gap usage request sent by a core network device.

28. The apparatus according to claim 27, wherein in response to a measurement gap corresponding to the measurement gap usage request sent by the terminal device being different from a measurement gap corresponding to the measurement gap usage request sent by the core network device, the measurement gap of the terminal device indicated by the first indication information is the measurement gap corresponding to the measurement gap usage request sent by the terminal device.

29. The apparatus according to claim 26, wherein the processing unit is configured to:
acquire the measurement gap configuration information from a core network device; or
receive first configuration information sent by the core network device, and determine the measurement gap configuration information according to the first configuration information.

30. The apparatus according to claim 29, wherein the first configuration information comprises:
at least one of positioning reference signal (PRS) configuration information or configuration information of a measurement gap.

31. An apparatus for indicating a measurement gap, comprising:
a transceiving unit, configured to send a measurement gap usage request to an access network device; wherein the measurement gap usage request is used to determine first indication information, and the first indication information is used to indicate a measurement gap of a terminal device.

32. The apparatus according to claim 31, wherein the transceiving unit is further configured to:
send indication information to the terminal device via the access network device, wherein the indication information is used to indicate to the terminal device that the measurement gap has been requested.

33. The apparatus according to claim 31 or 32, further comprising:
a processing unit, configured to determine measurement gap configuration information; wherein a measurement gap corresponding to the measurement gap usage request is one of at least one measurement gap comprised in the measurement gap configuration information.

34. The apparatus according to claim 32, wherein the transceiving unit is configured to:
send a long term evolution positioning protocol (LPP) message to the terminal device via the access network device, wherein the LPP message comprises the indication information.

35. The apparatus according to claim 33, wherein the processing unit is configured to:
determine the measurement gap configuration information according to at least one of positioning reference signal (PRS) configuration information, a positioning accuracy or a positioning delay requirement; or
acquire the measurement gap configuration information from the access network device.

36. An apparatus for indicating a measurement gap, comprising:
a transceiving unit, configured to receive first indication information sent by an access network device, wherein the first indication information is used to indicate a measurement gap of the terminal device.

37. The apparatus according to claim 36, wherein the transceiving unit is further configured to:
send a measurement gap usage request to the access network device.

38. The apparatus according to claim 36, wherein the transceiving unit is further configured to:
receive indication information sent by a core network device, wherein the indication information is used to indicate to the terminal device that the measurement gap has been requested.

39. The apparatus according to claim 36, wherein the transceiving unit is configured to: receive measurement gap configuration information; wherein a measurement gap corresponding to the measurement gap usage request is one of at least one measurement gap comprised in the measurement gap configuration information.

40. The apparatus according to claim 38, wherein the transceiving unit is configured to: receive a long term evolution positioning protocol (LPP) message sent by the core network device, wherein the LPP message comprises the indication information.

41. The apparatus according to claim 39, wherein the transceiving unit is configured to:
receive the measurement gap configuration information sent by the access network device via a radio resource control (RRC) message; or
receive the measurement gap configuration information sent by a core network device via a long term evolution positioning protocol (LPP) message.

42. An apparatus for indicating a measurement gap, comprising:
a transceiving unit configured to: trigger a positioning reference signal (PRS) measurement by a core network device; and send a measurement gap of a terminal device to the terminal device.

43. The apparatus according to claim 42, wherein the transceiving unit is configured to: send second indication information to the terminal device via an access network device, wherein the second indication information carries the measurement gap of the terminal device.

44. The apparatus according to claim 42, further comprising:
a processing unit, configured to determine measurement gap configuration information; wherein the measurement gap of the terminal device is one of at least one measurement gap comprised in the measurement gap configuration information.

45. The apparatus according to claim 43, wherein the transceiving unit is configured to:
send a long term evolution positioning protocol (LPP) message to the terminal device via the access network device, wherein the LPP message comprises the second indication information.

46. The apparatus according to claim 44, wherein the processing unit is configured to:
determine the measurement gap configuration information according to at least one of positioning reference signal (PRS) configuration information, a positioning accuracy or a positioning delay requirement; or
acquire the measurement gap configuration information from an access network device.

47. An apparatus for indicating a measurement gap, comprising:
a transceiving unit, configured to: receive a measurement gap of a terminal device sent by a core network device, wherein the measurement gap is used for a positioning reference signal (PRS) measurement.

48. The apparatus according to claim 47, wherein the transceiving unit is configured to:
receive a long term evolution positioning protocol (LPP) message sent by the core network device via an access network device, wherein the LPP message comprises the measurement gap.

49. A communication device, comprising:
a processor; and
a memory, having stored therein computer programs,
wherein the processor is configured to execute the computer programs stored in the memory to cause the communication device to perform the method according to any one of claims 1 to 6.

50. A communication device, comprising:
a processor; and
a memory, having stored therein computer programs,
wherein the processor is configured to execute the computer programs stored in the memory to cause the communication device to perform the method according to any one of claims 7 to 11 or claims 18 to 22.

51. A communication device, comprising:
a processor; and
a memory, having stored therein computer programs,
wherein the processor is configured to execute the computer programs stored in the memory to cause the communication device to perform the method according to any one of claims 12 to 17 or claims 23 to 24.

52. A communication device, comprising: a processor and an interface circuit;
wherein the interface circuit is configured to receive code instructions and transmit the code instructions to the processor; and
the processor is configured to run the code instructions to perform the method according to any one of claims 1 to 6.

53. A communication device, comprising: a processor and an interface circuit;
wherein the interface circuit is configured to receive code instructions and transmit the code instructions to the processor; and
the processor is configured to run the code instructions to perform the method according to any one of claims 7 to 11 or claims 18 to 22.

54. A communication device, comprising: a processor and an interface circuit;
wherein the interface circuit is configured to receive code instructions and transmit the code instructions to the processor; and
the processor is configured to run the code instructions to perform the method according to any one of claims 12 to 17 or claims 23 to 24.

55. A computer-readable storage medium having stored therein instructions that, when executed, cause the method according to any one of claims 1 to 6 to be implemented.

56. A computer-readable storage medium having stored therein instructions that, when executed, cause the method according to any one of claims 7 to 11 or claims 18 to 22 to be implemented.

57. A computer-readable storage medium having stored therein instructions that, when executed, cause the method according to any one of claims 12 to 17 or claims 23 to 24 to be implemented.
